# EUROPÄISCHE PATENTSCHRIFT

(11) **EP 3 766 689 B1**
(45) Veröffentlichungstag und Bekanntmachung des Hinweises auf die Patenterteilung: **09.03.2022**
(21) Anmeldenummer: 20180682.5
(22) Anmeldetag: 18.06.2020
(51) Int. Cl.: B32B 7/10, B32B 27/08, B32B 27/20, B32B 27/32, B32B 27/40, B65D 65/40

(54) **INLINE BESCHICHTETE BIAXIAL ORIENTIERTE POLYETHYLENFOLIE UND VERFAHREN ZU IHRER HERSTELLUNG**
IN-LINE COATED BIAXIALLY ORIENTED POLYETHYLENE FILM AND METHOD FOR PRODUCING THE SAME
FILM DE POLYÉTHYLÈNE CONTINU, REVÊTU, ORIENTÉ BIAXIAL ET SON PROCÉDÉ DE FABRICATION

(30) Priorität: 19.07.2019 DE 102019119600
(43) Veröffentlichungstag der Anmeldung: 20.01.2021
(73) Patentinhaber: Brückner Maschinenbau GmbH & Co. KG, 83313 Siegsdorf (DE)
(72) Erfinder: LINDEMANN, Willi, 83435 Bad Reichenhall (DE); BARTH, Jan, 83313 Siegsdorf (DE); Körber, Alois, Dr., 83242 Reit im Winkel (DE)
(74) Vertreter: Flach Bauer Stahl Patentanwälte Partnerschaft mbB

(56) Entgegenhaltungen:
- WO-A1-2019/145442
- US-A1- 2017 341 353

## Beschreibung

Die vorliegende Erfindung betrifft eine biaxial orientierte Polyethylenfolie (BOPE) umfassend Schichten (A) bis (D), worin Schichten (B) bis (D) biaxial orientiertes Polyethylen enthalten und Schicht (A) Polyurethan und Nanopartikel enthält und eine Schichtdicke von 25 bis 300 nm aufweist, Schicht (B) Polymere mit funktionellen Gruppen umfasst, welche mit Polyurethan kovalente Bindungen auszubilden vermögen und direkt mit Schicht (A) verbunden ist, Schicht (C) wenigstens eine Schichtdicke von 50 % der Gesamtdicke der Folie aufweist und Schicht (D) eine Außenschicht der Folie darstellt, welche Antiblockmittel enthält. Die Erfindung betrifft ferner Verfahren zur Herstellung solcher Folien.

### Stand der Technik

Kunststofffolien umfassend oder bestehend aus biaxial orientiertem Polyethylen (BOPE-Folien, auch biaxial verstreckte Polyethylenfolien genannt) sind seit langem bekannt, wurden aber bisher eher selten eingesetzt. Polyethylenfolien werden im Stand der Technik üblicherweise im Blas, Cast oder MD-Reck-Prozess hergestellt. Sie weisen bessere optische Eigenschaften und eine bessere Zugfestigkeit auf und sind nach Corona-Behandlung besser bedruckbar als andere Polyethylenfolien.

In dem Dokument US 2017/341353 A1 werden Polyethylen basierte Folien mit einer oder mehreren Schichten und einer Deckschicht offenbart, bei denen die Deckschicht, welche einen Klebstoff und ein Material enthält, welches Strahlung absorbiert. Der Klebstoff kann ein Polyurethan sein, das Strahlung absorbierende Material kann Nanopartikel enthalten und die Polyethylenschichten können Antiblockmittel enthalten.

In der WO 2019/145442 A1 wird eine Polypropylenfolie offenbart, umfassend 4 Schichten (A) bis (D), die in der Reihenfolge von (A) bis (D) angeordnet sind, worin Schichten (B) bis (D) biaxial orientiertes Polypropylen umfassen und worin Schicht (A) Polyurethan und Nanopartikel umfasst und eine Schichtdicke von 25 bis 300 nm aufweist, Schicht (B) Polymere mit funktionellen Gruppen umfasst, welche mit Polyurethan kovalente Bindungen ausbilden können und direkt mit Schicht (A) verbunden ist, Schicht (C) wenigstens eine Schichtdicke von 50 % der Gesamtdicke der Folie aufweist und Schicht (D) eine Außenschicht der Folie darstellt und Antiblockmittel umfasst.

Insbesondere als preiswerte Materialien zur Verpackung von Lebensmitteln werden BOPE-Folien eingesetzt. Mechanische Eigenschaften, Transparenz, Barriereeigenschaften und dergleichen stellen oft wichtige Eigenschaften bei der Verwendung solcher Polyethylenfolien dar. Bei der Verpackung von luft- und/oder wasserempfindlichen Gegenständen wie Lebensmitteln, Arzneimitteln und dergleichen, sind die guten Barriereeigenschaften insbesondere gegenüber Sauerstoff und Wasser wichtige Eigenschaften solcher Folien. Gute Barriereeigenschaften führen zu einer längeren Haltbarkeit der verpackten luft- und/oder wasserempfindlichen Gegenstände. Dies gilt insbesondere für Lebensmittel. BOPE-Folien weisen jedoch im Allgemeinen nachteilige Barriereeigenschaften für Sauerstoff auf. Die Sauerstoffdurchlässigkeit ("OTR", "oxygen transmission rate") für Folien von 20 µm Dicke liegt im Allgemeinen etwa zwischen 2000 und 5000 cm³/m²*d. Metallisierte BOPE-Folien weisen immer noch Werte von 200 bis 300 cm³/m²*d auf, was für viele Anwendungen ungenügend ist. Ein Teil der Qualitätssicherung durch die Kunststofffolie der Verpackung ist bei zahlreichen Lebensmitteln ein Schutz gegen Aromaverluste und die Verhinderung des Austritts von geruchsintensiven Stoffen sowie, in zahlreichen Fällen, ein Schutz vor Luftsauerstoff und/oder vor Luftfeuchtigkeit und/oder vor Feuchtigkeitsverlusten aus der Ware. Folien mit derartigen Eigenschaften werden auch als Barrierefolien oder Sperrschichtfolien bezeichnet. Zur Verbesserung der Barriereeigenschaften sind verschiedenste Maßnahmen angewendet worden, wie die monoaxiale oder biaxiale Orientierung der Polyethylenfolien (MOPE- oder BOPE-Folien) und die Verwendung von Beschichtungen die die Barriereeigenschaften erhöhen, insbesondere auch die Beschichtung mit Metallen und Metalloxiden oder anderen Polymeren als Polyethylen.

Neben den Gebrauchseigenschaften sind bei Folien jedoch auch bestimmte Eigenschaften erforderlich, die die kostengünstige Herstellung ermöglichen. Hierzu zählt vor allem die Beschaffenheit der Oberflächen, die einerseits glatt genug sein müssen um eine geschlossene Beschichtung durch Metallisierung und dergleichen zu ermöglichen, andererseits aber eine genügende Oberflächenrauheit aufweisen müssen um für die Verarbeitung auf Rollen und so weiter genügend Reibung zu erzeugen. Ansonsten wäre eine Herstellung der Folien durch die üblichen hocheffizienten Produktionsstraßen mit hohen Vortriebsgeschwindigkeiten nicht möglich. Um die Bedruckbarkeit der Folien zu gewährleisten, muss die Folienoberfläche ebenfalls bestimmte Eigenschaften aufweisen, zu denen eine geeignete Oberflächenspannung gehört.

Hochfeste Folien mit ausgezeichneten Barriereeigenschaften sind aus der DE 10 2005 020 913 B3 bekannt. Die vorteilhaften Barriereeigenschaften und Oberflächeneigenschaften sind auf eine zusätzliche Polyamid-haltige Schicht zurückzuführen, die coextrudiert wird. Diese Folien sind jedoch in der Herstellung relativ aufwändig und die Materialkosten für das Polyamid sind hoch, auch, weil es in großen Mengen eingesetzt wird. Ferner könnte vor allem die Oberflächenbeschaffenheit der Polyamid Schicht verbessert werden, um bei Aufbringen einer Metall- oder Metalloxidschicht eine bessere Haftung der Metall- oder Metalloxidschicht zu erreichen und die Verarbeitbarkeit zu verbessern.

### Aufgabe der Erfindung

Es war daher die Aufgabe der vorliegenden Erfindung, eine Folie zur Verfügung zu stellen, die vorteilhafte Barriereeigenschaften aufweist, insbesondere vorteilhafte Barriereeigenschaften gegenüber Sauerstoff und Wasserdampf. Eine weitere Aufgabe ist es, eine leicht und mit geringem Aufwand herstellbare BOPE-Folie bereitzustellen. Außerdem soll eine Folie bereitgestellt werden, die günstige Oberflächeneigenschaften aufweist. Die Folie soll insbesondere eine schnelle Verarbeitung begünstigen. Ebenso ist es eine Aufgabe der vorliegenden Erfindung eine Folie bereitzustellen, die eine verbesserte Haftung von Metall- oder Metalloxidschichten ermöglicht. Bevorzugt ist die BOPE-Folie preiswert herstellbar.

### Beschreibung der Erfindung

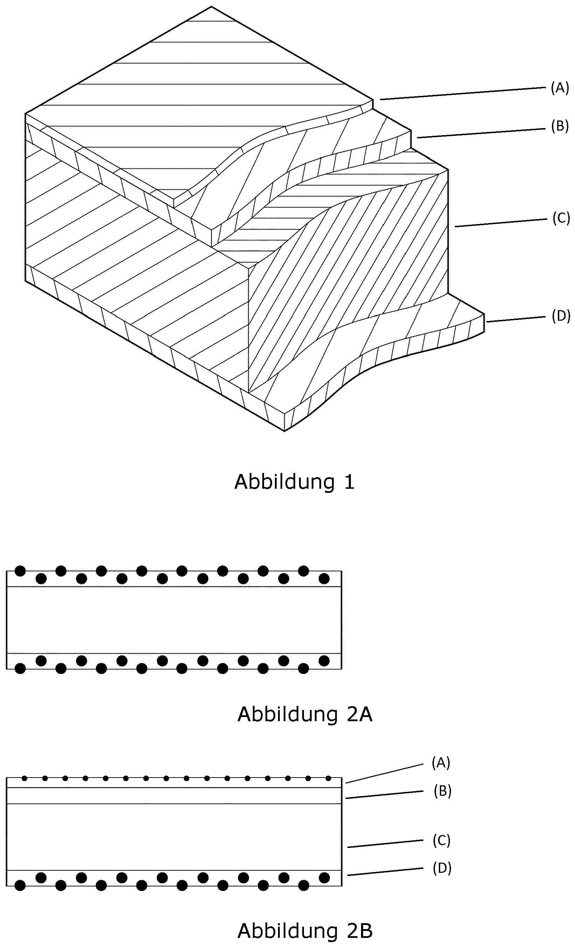

Ein Gegenstand der vorliegenden Erfindung ist eine Polyethylenfolie umfassend 4 Schichten (A) bis (D), die in der Reihenfolge von (A) bis (D) angeordnet sind (siehe Abbildungen 1 und 2B), worin Schichten (B) bis (D) biaxial orientiertes Polyethylen umfassen und worin
Schicht (A) Polyurethan und Nanopartikel umfasst und eine Schichtdicke von 25 bis 300 nm aufweist, wobei die durch Laserbeugungs-Partikelgrößenanalyse bestimmte mittlere Teilchengröße der Nanopartikel im Bereich von 20 bis 300 nm liegt und nicht mehr als 20 % größer als die Dicke der Schicht (A) ist,
Schicht (B) Polymere mit funktionellen Gruppen umfasst, welche mit Polyurethan kovalente Bindungen ausbilden können und direkt mit Schicht (A) verbunden ist, wobei es sich bei dem Polymer, welches die funktionellen Gruppen umfasst, welche mit Polyurethan kovalente Bindungen ausbilden können, um das in Schicht (B) enthaltene Polyethylen handeln kann,
Schicht (C) wenigstens eine Schichtdicke von 50 % der Gesamtdicke der Folie aufweist und
Schicht (D) eine Außenschicht der Folie darstellt und Antiblockmittel umfasst.

Solche Folien weisen neben guten mechanischen Eigenschaften auch verbesserte Barriereeigenschaften und verbesserte Oberflächeneigenschaften auf. Insbesondere gehen sie mit auf Schicht (A) aufgebrachten Metall- oder Metalloxidschichten sehr feste Verbindungen ein. Soweit im Folgenden von Metallschichten die Rede ist, so sind stets auch Metalloxidschichten gemeint, soweit nichts anderes angegeben ist oder sich aus dem Zusammenhang nichts anderes ergibt.

Abbildungen 2A und 2B zeigen einen Vergleich zwischen einer herkömmlichen biaxial orientierten Polyethylenfolie mit einer Trageschicht in der Mitte und je einer Außenschicht (Skin-Layer) an beiden Oberflächen (Abbildung 2A) und der erfindungsgemäßen Folie (Abbildung 2B). In der herkömmlichen Folie gemäß Abbildung 2A ist die mittlere Schicht die Haupt- oder Trageschicht. Sie ist die Schicht, die der gesamten Folie ihre mechanischen und Barriereeigenschaften verleiht. Die beiden Außenschichten bestehen in der Regel aus ähnlichem Material wie die Trageschicht und enthalten zusätzlich Antiblockmittel. Antiblockmittel sind Mittel, die der Oberfläche der Folie eine erhöhte Rauheit verleihen. Beim Aufrollen der Folie verhindert diese Rauheit eine zu starke Adhäsion der Vorderseite und der Rückseite aneinander, was anschließend das Abwickeln erleichtert. In der Regel handelt es sich um Feststoffpartikel mit einer Größe im Mikrometer-Bereich, bevorzugt sind 1 bis 10 µm und besonders bevorzugt 1,5 bis 5 µm. Die Antiblockmittel werden in der Regel ausschließlich in die Außenschichten eingebracht, damit sie die Eigenschaften der Trageschicht nicht negativ beeinflussen.

In der erfindungsgemäßen Folie nach Abbildung 2B entspricht Schicht (C) der Trageschicht und Schicht (D) der unteren Außenschicht der herkömmlichen Folie. Schichten (A) und (B) ersetzen die obere Außenschicht. Das Material der Schicht (A) (Polyurethan) verleiht der erfindungsgemäßen Polyethylenfolie verbesserte Barriereeigenschaften. Außerdem ist die Polyurethan-Oberfläche außerordentlich glatt (weist eine sehr geringe Oberflächenrauheit auf) und weist eine deutlich erhöhte Oberflächenspannung auf. Wenn darauf zusätzlich eine Metallschicht aufgebracht wird, um die Barriereeigenschaften weiter zu erhöhen, haftet diese daher außerordentlich fest an der Polyurethan-Oberfläche der Schicht (A). Auch die Haftung der Schicht (A) an der Schicht (B) ist außerordentlich stark. Die Bedruckbarkeit der Schicht (A) ist ebenfalls hervorragend. Schicht (A) wirkt daher zusätzlich als Primer für die Metallisierung und das Bedrucken. Daher ist Schicht (A) eine Außenschicht der Folie, wenn die Folie nicht mit einer Metall oder Metalloxidschicht versehen ist.

Die Nanopartikel verleihen der Schicht (A) trotz großer Glätte genügend Oberflächenrauheit. Überraschender Weise führt die Substitution der Antiblockpartikel durch Nanopartikel dazu, dass die Barriereeigenschaften solcher Metallschichten verbessert werden. Dies dürfte zum einen daran liegen, dass die Oberflächenrauhigkeit geringer ist als bei herkömmlichen Folien, die Antiblockmittel in der Schicht an der Oberfläche der Folie aufweisen. So kann eine gleichmäßigere Beschichtung erhalten werden. Zum anderen verbessern sich aber auch die Barriereeigenschaften von aufgewickelten metallisierten Folien. Industriefolien werden in Form von Rollen gelagert und für die Weiterverarbeitung zur Verfügung gestellt. Beim Aufrollen kommen Ober- und Unterseite der Folie in Kontakt miteinander. So kommt bei einer einseitig mit Metall beschichteten Folie die Metallschicht in Kontakt mit der anderen Seite der Folie. Bei der herkömmlichen BOPE-Folie gemäß Abbildung 2A kommt die Metallschicht dabei im aufgewickelten Zustand von beiden Seiten direkt mit Antiblockmitteln in Berührung. An Stellen wo die großen Partikel der Antiblockmittel sich auf beiden Seiten der Folie direkt gegenüberstehen, wird an diesem Ort ein hoher Druck auf die Folie ausgeübt, was zu Löchern (z. B. Pinholes), Rissen und anderen Defekten in der Metallschicht führen kann und deren Barriereeigenschaften herabsetzt. Bei der erfindungsgemäßen Folie treffen die Partikel der Antiblockmittel auf die deutlich kleineren Nanopartikel. Dies setzt den lokal ausgeübten Druck herab und reduziert die Zahl der Defekte und insbesondere der Pinholes in der Metallschicht. Dieser Effekt tritt auch auf, wenn Schicht (D) keine Antiblockmittel umfasst. Auch in diesem Fall sind die Barriereeigenschaften verbessert, weil die kleineren Nanopartikel weniger Defekte an der Metall- oder Metalloxidbeschichtung erzeugen als herkömmliche Antiblockmittel.

Die hohe Glätte der Polyurethan-Oberfläche, ihre hohe Oberflächenspannung und auch das Polyurethanmaterial selbst bewirken beim Aufwickeln auf Rollen eine starke Haftung der Unter- und der Oberseite aneinander. Dies kann beim Abrollen bei den üblicherweise hohen Verarbeitungsgeschwindigkeiten zu Unregelmäßigkeiten im Bewegungsablauf führen, wodurch starke Kräfte auf die Folie wirken können. Dies kann zu einer Beschädigung der Barriereschichten führen. Die Nanopartikel bewirken jedoch die Bildung einer Luftschicht zwischen den Oberflächen und ermöglichen so das problemlose Abwickeln der Folien auch bei hoher Geschwindigkeit.

Grundsätzlich kann für die vorliegende Erfindung in den Schichten (B) bis (D) jede Art von Polyethylen verwendet werden. Die Eigenschaften der Materialien und der gebildeten Folie können durch Zusätze zu den Polyethylenen weiter angepasst werden um die Verarbeitbarkeit und/oder die Eigenschaften der fertigen Folie günstig zu beeinflussen. Das Polyethylen kann zum Beispiel ausgesucht sein aus der Gruppe bestehend aus Polyethylen geringer Dichte (LDPE; low density polyethylene), linearem Polyethylen niederer Dichte (LLDPE; linear low density polyethylene), Polyethylene mittlere Dichte (MDPE, medium density polyethylene) und Polyethylene hoher Dichte (HDPE; high density polyethylene). Informationen über die Eigenschaften von Polyethylenen können den Standardwerk "Domininghaus; Kunststoffe, Eigenschaften und Anwendungen" 6. Auflage, 2005 entnommen werden. Auch Polyethylen-Polymere, die außer Ethylen andere ungesättigte Olefine als Monomere enthalten, wie zum Beispiel Propylen können verwendet werden.

Die für die erfindungsgemäßen Folien und deren Herstellungsverfahren wichtigen Eigenschaften des Polyethylens werden beeinflusst durch die mittlere Molmasse (oder das mittlere Molekulargewicht oder das Zahlenmittel der Molmasse), die Molmassenverteilung, die Dichte und die Art und Häufigkeit von Seitenketten des Polyethylens. Bevorzugt wird LLDPE verwendet. Es weist sich gegenüber anderen Polyethylen-Sorten bei gleicher Dichte durch eine höhere Steifigkeit und Zugfestigkeit aus. Weiter weist es eine höhere Zähigkeit (zum Beispiel Durchstoßfestigkeit und Dart-Drop-Schlagzugzähigkeit) aus. Abrisse durch Stippen während der Folienextrusion sind sehr selten, bzw. treten überhaupt nicht auf und LLDPE weist eine vorteilhafte Siegelfähigkeit auf. LLDPE weist außerdem eine Ausziehfähigkeit für Folien bis zu einer minimalen Dicke von etwa 5 µm auf. Ferner weist LLDPE eine hohe Beständigkeit gegen Spannungsrissbildung auf und die daraus geformten Folien weisen vorteilhafte optische Eigenschaften auf, insbesondere ist die Trübung (Haze) vergleichsweise gering und der Glanz (Gloss) ist hoch.

Für alle Arten von eingesetzten Polyethylenen gilt, dass sowohl Polyethylene mit einer engen als auch Polyethylene mit einer weiten Molekulargewichtsverteilung verwendet werden können. Ferner können Polyethylene mit mono-, bioder trimodalen Verteilungskurven Verwendung finden. Typische und bevorzugte Werte des gewichtsmittleren Molekulargewichts (Mw) des LLDPEs sind 50.000 bis 150.000 g/mol. Besonders bevorzugt weist das eingesetzte LLDPE ein gewichtsmittleres Molekulargewicht (Mw) von 69.000 bis 100.000 g/mol auf.

Die Dichte des eingesetzten LLDPE beträgt bevorzugt 0,90 bis 0,95, bevorzugt 0,91 bis 0,94 g/cm³. Wird LDPE eingesetzt so beträgt die Dichte bevorzugt 0,916 bis 0,925 g/cm³. Für MDPE liegt die bevorzugte Dichte im Bereich von 0,926 bis 0,940 g/cm³ und HDPE weist bevorzugt eine Dichte im Bereich von 0,941 bis 0,965 g/cm³ auf. Die Kristallinität des eigesetzten Polyethylens beträgt bevorzugt 30 bis 70 %, besonders bevorzugt 35 bis 60 %, gemessen durch dynamische Differenzkalorimetrie (DSC). Die Angaben zur Kristallinität gelten insbesondere für LLDPE.

LLDPE enthält neben Ethylen alpha-Olefine als Co-Monomere in wechselnden Mengen. Bevorzugt wird in der vorliegenden Erfindung LLDPE eingesetzt, welches bis zu 20 Gew.-%, bevorzugt bis zu 15 Gew.-% und am meisten bevorzugt bis zu 10 Gew.-% alpha-Olefin-Monomere enthält, jeweils bezogen auf die Gesamtmasse des LLDPE. Entsprechend enthält das eingesetzte Polyethylen bevorzugt wenigstens 80 Gew.-% Ethylen-Monomere, besonders bevorzugt wenigstens 85 Gew.-% und am meisten bevorzugt wenigstens 90 Gew.-%, jeweils bezogen auf die Gesamtmasse des LLDPE. Grundsätzlich können dabei alle Arten von alpha-Olefinen als Co-Monomere eingesetzt werden, bevorzugt handelt es sich aber um alpha-Olefine mit linearen Seitenketten. Üblicherweise werden dabei als alpha-Olefine mit Seitenketten eingesetzt die eine gerade Kohlenstoffzahl aufweisen. Es kann sich um lineare Olefine ausgesucht aus der Gruppe bestehend aus 1-Buten, 1-Hexen, 1-Octen, 1-Decen und 1-Dodecen handeln. Bevorzugt ist ein lineare Olefin ausgesucht aus der Gruppe bestehend aus 1-Hexen, 1-Octen, und 1-Decen. Am meisten bevorzugt sind 1-Hexen und 1-Octen.

Ein geeignetes Polyethylen ist ein LLDPE, welches wenigstens 80 Gew.-% Ethylen-Monomere und bis zu 20 Gew.-% alpha-Olefin-Monomere enthält, jeweils bezogen auf die Gesamtmasse des LLDPE, wobei die alpha-Olefin-Monomere ausgesucht sind aus der Gruppe bestehend aus 1-Buten, 1-Hexen, 1-Octen, 1-Decen und 1-Dodecen und dass LLDPE ein gewichtsmittleres Molekulargewicht (Mw) von 50.000 bis 150.000 g/mol, eine Dichte von 0,90 bis 0,95 g/cm³ und eine Kristallinität von 30 bis 70 % aufweist. Ein besonders geeignetes Polyethylen ist daher ein LLDPE, welches wenigstens 85 Gew.-% Ethylen-Monomere und bis zu 15 Gew.-% alpha-Olefin-Monomere enthält, jeweils bezogen auf die Gesamtmasse des LLDPE, wobei die alpha-Olefin-Monomere ausgesucht sind aus der Gruppe bestehend aus 1-Hexen, 1-Octen, und 1-Decen und dass LLDPE ein gewichtsmittleres Molekulargewicht (Mw) von 69.000 bis 100.000 g/mol, eine Dichte von 0,90 bis 0,95 g/cm³ und eine Kristallinität von 30 bis 70 % aufweist. Am meisten geeignet ist ein LLDPE, welches wenigstens 90 Gew.-% Ethylen-Monomere und bis zu 10 Gew.-% alpha-Olefin-Monomere enthält, jeweils bezogen auf die Gesamtmasse des LLDPE, wobei die alpha-Olefin-Monomere ausgesucht sind aus der Gruppe bestehend aus 1-Hexen und 1-Octen und dass LLDPE ein gewichtsmittleres Molekulargewicht (Mw) von 69.000 bis 100.000 g/mol, eine Dichte von 0,91 bis 0,94 g/cm³ und eine Kristallinität von 35 bis 60 % aufweist.

So weit nicht anders angegeben, ist es ferner bevorzugt, dass die Schichten (B) bis (D) jeweils wenigstens 35 Gew.-% Polyethylen, besonders bevorzugt wenigstens 50 Gew.-% Polyethylen, ganz besonders bevorzugt wenigstens 70 Gew.-% Polyethylen und am meisten bevorzugt wenigstens 90 Gew.-% Polyethylen enthalten, jeweils bezogen auf die Gesamtmasse der Schicht. Die Schichten (B) bis (D) können jedoch auch andere Polymere als Polyethylen umfassen, soweit die Schichten, beziehungsweise die Materialien zu Ihrer Herstellung, insgesamt noch orientierbar sind.

Schichten (B) bis (D) der erfindungsgemäßen Folie formen eine biaxial orientierte Polyethylenfolie. Die Längsrichtung ist die Richtung in die die Folie ursprünglich extrudiert wurde ("Maschinenrichtung") und wird im Allgemeinen auch mit "MD" abgekürzt. Die Querrichtung steht senkrecht darauf und wird im Allgemeinen auch mit "TD" abgekürzt. Die Dicke ist die dritte Dimension. Biaxial orientierte Polyethylenfolien weisen bessere mechanischen Eigenschaften und bessere optische Eigenschaften als Blasfolien auf.

Die Dicke der erfindungsgemäßen Folie liegt üblicherweise in einem Bereich von 3 bis 50 µm, bevorzugt in einem Bereich von 5 bis 40 µm, besonders bevorzugt in einem Bereich von 10 bis 30 µm. Folien mit geringen Dicken sind preiswert und leicht. Ist die Dicke zu gering, so sind die mechanischen Eigenschaften und damit auch die Verarbeitbarkeit ungenügend. Ist sie zu hoch, so ist ebenfalls die Verarbeitbarkeit bei der Herstellung und Weiterverarbeitung unzureichend.

### Schicht (A)

Die erfindungsgemäße Folie ist dadurch gekennzeichnet, dass sie eine Polyurethanschicht, i.e. Schicht (A) aufweist. Die Polyurethan-Schicht (A) weist eine starke diffusionshemmende Wirkung auf, die zu einer deutlichen Verbesserung der Sauerstoff-Barriereeigenschaften und der Wasserdampf-Barriereeigenschaften der gesamten Folie beiträgt. Daneben dient Schicht (A) vor allem dazu eine gut haltbare Beschichtung der erfindungsgemäßen Folie mit Metallen und Metalloxiden zu ermöglichen.

Schicht (A) weist eine günstige und genau einstellbare Oberflächenrauheit auf, die einerseits durch die sehr glatte Oberfläche der Schicht (A) als auch durch die Nanopartikel in der Schicht (A) bedingt wird. Die sehr glatte Oberfläche der Schicht (A) ermöglicht eine sehr stark anhaftende Beschichtung für Metalle wie Aluminium oder für Metalloxide, wie Aluminiumoxid oder Siliciumdioxid. Wegen der geringen Größe der Nanopartikel behindern diese eine feste Bindung zwischen Metall- oder Metalloxidschicht (M) und der Schicht (A) nicht. Ferner verursachen die Nanopartikel weniger Defekte in der Metall- oder Metalloxidschicht als Blockmittel. Andererseits vermitteln die Nanopartikeln der Oberfläche der Schicht (A) eine genügende Oberflächenrauheit und erzeugen so eine Reibung, die es erlaubt, die Folie im Herstellungsprozess durch Walzen effektiv zu transportieren und sich auf- und abwickeln lassen. Schicht (A) weist ferner eine sehr hohe und sehr homogen verteilte Oberflächenspannung auf und ist durch ihre chemische Beschaffenheit deutlich besser für eine anschließende Beschichtung mit Metallen oder Metalloxiden geeignet als Polyethylen-Schichten, was ebenfalls die Haftung von darauf aufgebrachten Metall- oder Metalloxidschichten (M) deutlich verbessert. Dies gilt insbesondere für die Metallschichten (M) aus Aluminium auf der Oberfläche der Schicht (A). Die Eindringtiefe von aufgedampften Aluminiumatomen ist im Vergleich zur nicht beschichteten Folie (ohne Schicht (A)) viel höher.

Des Weiteren ist eine dem Herstellungsprozess und insbesondere dem Reckprozess nachgeschaltete Oberflächenbehandlung (zum Beispiel Corona, Plasma- oder Flammbehandlung) nicht mehr notwendig. Diese Behandlung ist normalerweise zwingend für eine BOPE Folie mit einer Polyethylen-Außenschicht, um eine Beschichtung mit Metallen oder Metalloxiden zu ermöglichen. Dabei werden funktionelle Gruppen an der unpolaren Oberfläche des Polyethylens erzeugt, was die Oberflächenspannung erhöht und die Haftung verbessert. Meist geschieht das zwischen Recken und Aufwickeln der Folie. Der Effekt lässt nach einer gewissen Zeit nach und muss dann gegebenenfalls vor der Weiterverarbeitung erneuert werden. Das heißt, die Oberflächenspannung sinkt nach wenigen Wochen Lagerung unter einen Schwellenwert und muss erneuert werden. Dies ist bei der der erfindungsgemäßen Folie nicht notwendig, da die inline Beschichtung mit Polyurethan, im Vergleich zur normalerweise nachfolgenden Oberflächenbehandlung, bei welcher es sich zum Beispiel um eine Corona-, Plasma- oder Flammbehandlung handeln kann, für eine dauerhafte Erhöhung der Oberflächenspannung sorgt und nicht aufgefrischt werden muss. Dies stellt einen großen kommerziellen Vorteil der vorliegenden Folien dar, da sie dauerhaft lagerfähig sind. Dies ist nicht nur prozesstechnisch sehr positiv, sondern führt auch zu einer großen Zeitersparnis.

Schicht (A) weist eine Schichtdicke im Bereich von 25 bis 300 nm auf, bevorzugt liegt diese im Bereich von 50 bis 250 nm und besonders bevorzugt im Bereich von 50 bis 150 nm. Schicht (A) weist dabei bevorzugt eine Schichtdicke im Bereich von 0,1 bis 5 %, bevorzugt im Bereich von 0,2 bis 3 % und besonders bevorzugt im Bereich von 0,5 bis 1 % der Dicke der erfindungsgemäßen Folie auf. Polyurethan ist im Vergleich zu Polyethylen relativ teuer. Eine geringe Schichtdicke führt daher zu geringeren Kosten. Ist die Schicht allerdings geringer als hier angegeben, so wird die Bildung einer homogenen Schicht (A) auf dem Film erschwert. Außerdem verliert die Schicht (A) sukzessive ihre Barriereeigenschaften. Eine hohe Schichtdicke führt dagegen zu höheren Kosten, aber auch zu besseren Barriereeigenschaften. Sehr große Dicken können aber nicht mehr in einem Inline-Verfahren aufgetragen werden (siehe unten) und erhöhen die Kosten daher überproportional.

Als Material für das Polyurethan sind handelsübliche Polyurethan-Dispersionen geeignet. Besonders geeignet ist Takelac WPB 341. Es handelt sich um eine wässrige Dispersion der Firma Mitsui Chemicals mit 30 % Polyurethan-Gehalt. Schicht (A) kann grundsätzlich auch durch andere Verfahren aufgebracht werden, verliert dabei aber unter Umständen die Vorteile, dass sie dünn ist, eine sehr gleichmäßige Dicke aufweist und sehr glatt ist. Auch das Herstellen der Schicht durch Inline-Coating ist dann unter Umständen nicht mehr möglich. Dieses einfache Herstellungsverfahren stellt aber einen wesentlichen Vorteil der vorliegenden Erfindung dar (siehe unten)

Die Nanopartikel der Schicht (A) enthalten bevorzugt Nanopartikel aus amorphen Siliciumdioxid. Besonders bevorzugt enthalten die Nanopartikel solche aus kolloidalem Siliciumdioxid. Es sind jedoch auch andere Nanopartikel geeignet. Bevorzugt werden die Partikel in kolloidaler Form als Dispersionen eingesetzt. Nanopartikel, die in trockener Form dem Polyurethan zugesetzt werden, neigen eher als kolloidale Dispersionen zur Agglomeration und Sedimentation. Dies ist unerwünscht. Es werden bevorzugt sphärische Partikel verwendet. Die mittlere Teilchengröße der Nanopartikel der Schicht (A) bestimmt durch Laserbeugungs-Partikelgrößenanalyse ist nicht mehr als 20 %, bevorzugt nicht mehr als 10 % und am meisten bevorzugt überhaupt nicht größer als die Dicke der Schicht (A). Größere Partikel, wie beispielsweise Antiblockpartikel würden zu weit aus der Schicht herausstehen und unter Umständen in einer etwaig aufgebrachte Metallschicht oder Metalloxidschicht (M) Defekte und insbesondere Pinholes verursachen, was die Barriereeigenschaften beeinträchtigen könnte. Die mittlere Teilchengröße der Nanopartikel in der Schicht (A) liegt bevorzugt im Bereich von 20 bis 300 nm, besonders bevorzugt im Bereich von 20 bis 150 nm, ganz besonders bevorzugt im Bereich von 50 bis 150 nm und am meisten bevorzugt im Bereich von 80 bis 150 nm. Bei zu kleinen Nanopartikeln haben diese keinen Effekt und die Folie wäre zu glatt. Eine Verarbeitung wäre nicht oder nicht in ausreichendem Maße möglich. Sind die Nanopartikel zu groß, so könnten die Nanopartikel über Schicht A hinausragen und so eine etwaige Beschichtung mit Metallen oder Metalloxiden beschädigen. Die Folien würden wasser- und luftdurchlässig.

Weiter weisen die Nanopartikel in der Schicht (A) bevorzugt eine spezifische BET-Oberfläche im Bereich von 10 bis 500 m²/g auf, besonders bevorzugt im Bereich von 10 bis 150 m²/g, ganz besonders bevorzugt im Bereich von 10 bis 100 m²/g und am meisten bevorzugt im Bereich von 20 bis 70 m²/g. Dies ermöglicht eine gute Anbindung der Nanopartikel an das Polyurethan. Nanopartikel des Typs Levasil 30/50 von Akzonobel sind besonders geeignet. Es handelt sich um eine Dispersion von kolloidalem Siliciumdioxid in Wasser.

Die Nanopartikel sind in der Schicht (A) bevorzugt in einer Menge im Bereich von 0,5 bis 30 Gew.-%, besonders bevorzugt im Bereich 0,5 bis 20 Gew.-% und ganz besonders bevorzugt im Bereich 1 bis 10 Gew.-% und am meisten bevorzugt im Bereich von 2 bis 7 Gew.-% enthalten. Die Menge der Nanopartikel erlaubt es, die Oberflächenrauheit anzupassen. Dies führt zu einer besonders guten Haftung von Metallschichten oder Metalloxidschichten (M) auf der Schicht (A) und erleichtert das Auf- und Abwickeln der Folie von Rollen bei großen Verarbeitungsgeschwindigkeiten.

### Schicht (B)

Um die Anbindung der Polyurethanschicht (A) an die Folie zu verbessern, umfasst Schicht (B), bei der es sich um eine Art Haftschicht handelt, Polymere mit funktionellen Gruppen, welche mit Polyurethan kovalente Bindungen ausbilden können. Bei diesen Polymeren handelt es sich bevorzugt um Polyethylen. Es kann sich auch um andere Polymere handeln, Schicht (B) muss dann aber neben diesen Polymeren noch Polyethylen enthalten. Schicht (B) enthält bevorzugt wenigstens 50 Gew.-% Polyethylen, ganz besonders bevorzugt wenigstens 70 % Polyethylen und am meisten bevorzugt wenigstens 90 Gew.-% Polyethylen, jeweils bezogen auf die Gesamtmasse der Schicht (B). Die funktionellen Gruppen wirken als Haftvermittler. Wenn Schicht B keine oder nicht genügend funktionelle Gruppen enthält, so löst sich Schicht A leicht von Schicht B und die Folie wird instabil. Bevorzugt ist das in Schicht (B) enthaltene Polyethylen das in Schicht (B) enthaltene Polymer mit funktionellen Gruppen ein und dasselbe Polymer. Die Verwendung von Polyethylen in Schicht (B) führt dazu, dass Schichten (B), (C) und (D) ähnliche Eigenschaften bei der Verarbeitung aufweisen. Unter Polyethylen sind dabei Polymere zu verstehen, die ausgesucht sind aus der Gruppe bestehend aus HDPE, LDPE, LLDPE sowie deren Co- und Blockcopolymere, aber auch Copolymere aus PP und PE können eingesetzt werden, wie vorstehend beschrieben. Darunter wiederum ist LLDPE am meisten bevorzugt, wie vorstehend beschrieben.

Wenn in Schicht (B) Blends eingesetzt werden, so können neben Polyethylenen auch andere Polyolefine eingesetzt werden. So kann neben Polyethylen bis zu 30 Gew.-% Polypropylen eingesetzt werden. Auch können verschiedene Polyethylen-Sorten eingesetzt werden. So kann LLDPE mit anderen Polyethylen-Sorten geblendet werden. Dies kann zu einer verbesserten Verarbeitbarkeit der Folien führen. Bevorzugt werden neben dem Polyethylen Polymere eingesetzt, die die Haftung der Schicht (A) verbessern.

Die funktionellen Gruppen sind bevorzugt ausgesucht aus der Gruppe bestehend aus Carbonsäureanhydridgruppen, Epoxidgruppen, Carbonsäuregruppen und Carbonsäureestergruppen. Die Polymeren der Schicht (B) können auch mehrere verschiedener solcher funktioneller Gruppen umfassen, also zum Beispiel Carbonsäureanhydridgruppen und Carbonsäureestergruppen. Besonders bevorzugt enthalten die Polymeren der Schicht (B) eine funktionelle Gruppe ausgesucht auf der Gruppe bestehen aus Carbonsäureanhydridgruppen und Carbonsäuregruppen. Ganz besonders bevorzugt sind Carbonsäureanhydridgruppen. Am meisten bevorzugt enthalten die Polymeren der Schicht (B) Maleinsäureanhydridgruppen. Bevorzugt umfasst Schicht (B) ein Maleinsäureanhydrid modifiziertes Polyethylen. Besonders bevorzugt besteht die Schicht daraus. Ganz besonders bevorzugt handelt es sich um ein Polyethylen mit aufgepfropften MaleinsäureanhydridGruppen und am meisten bevorzugt um ein Polyethylen-Homopolymer mit aufgepfropften Maleinsäureanhydrid-Gruppen. Maleinsäureanhydrid-Gruppen führen zu besonders starken Bindungen zwischen Schicht (A) und Schicht(B). Ebenfalls bevorzugt als Polymer mit funktionellen Gruppen ist Ethylenacrylsäure (EAA). Es ist ebenfalls bevorzugt, dass Schicht (B) daneben keine weiteren Polymeren enthält. Eine große Menge an Maleinsäureanhydrid modifiziertem Polymer trägt besonders stark zur Bindung zwischen den Schichten (A) und (B) bei. Der Pfropfgrad des Polymers mit aufgepfropften Maleinsäureanhydrid-Gruppen liegt bevorzugt in einem Bereich von 0,01 bis 1 %, besonders bevorzugt in einem Bereich von 0,1 bis 0,4 %. Dies gilt insbesondere für Polyethylen-Homopolymere.

Die Maleinsäureanhydrid-Gruppen können auch durch Copolymerisation von copolymerisierbaren Derivaten von Maleinsäureanhydrid, wie zum Beispiel 2-Vinyl-Maleinsäure-anhydrid in das Polymer, insbesondere in das Polyethylen eingeführt werden.

Derartige modifizierte Polyethylene sind bekannt und werden beispielsweise von der Fa. Mitsui Chemicals unter dem Handelsnamen Admer^{®} vertrieben. Bevorzugt sind für die Zwecke der vorliegenden Erfindung Ethylen-Homopolymere oder Ethylen-Copolymere, die mit Maleinsäureanhydrid modifiziert sind, deren Schmelzindices im Bereich von 1 bis 10 g/10 min bei 230°C (ASTM D 1238), besonders bevorzugt im Bereich von 1 bis 6 g/10 min. Ebenfalls bevorzugt liegt der Vicat Erweichungspunkt der Ethylen-Homopolymeren oder Ethylen-Copolymeren im Bereich von 60 bis 110 °C, besonders bevorzugt im Bereich von 80 bis 110 °C (ASTM D 1525) . Es ist ebenfalls bevorzugt, dass der Schmelzpunkt der Ethylen-Homopolymeren oder Ethylen-Copolymeren im Bereich von 80 bis 125 °C, besonders bevorzugt im Bereich von 100 bis 125 °C und am meisten bevorzugt im Bereich von 110 bis 125 °C liegt. Die aufgepfropften Maleinsäure-AnhydridGruppen, erhöhen die Polarität auf der Oberfläche der Schicht (B) und ermöglichen eine chemische Verbindung zu den Bestandteilen der Polyurethanschicht (A).

Die Maleinsäureanhydrid-modifizierten Polyethylene sind bevorzugt lineare Polyethylene (LLDPE). Die Dichte beträgt bevorzugt 0,90 bis 0,94 g/ml Ganz besonders bevorzugt sind die Maleinsäureanhydrid modifizierte Polyethylene mit den Handelsnamen ADMER^{™} NF-408E, NF-377E und AT2539E (erhältlich von Mitsui Chemicals GmbH, Deutschland). Durch die spezielle Zusammensetzung des Materials weisen diese einen sehr hohen Glanz auf. Die hierbei entstehende Oberfläche der Schicht (B) ist durch die geringe Oberflächenrauheit und die erhöhte Oberflächenspannung sehr gut für die Beschichtung mit der Schicht (A) (insbesondere nach der MD-Verstreckung, siehe unten) geeignet und bewirkt eine ausreichende Haftung der Schicht (A) auf der Schicht (B).

Schicht (B) umfasst bevorzugt wenigstens 50 Gew.-%, besonders bevorzugt wenigstens 80 Gew.-%, ganz besonders bevorzugt wenigstens 95 Gew.-% und am meisten bevorzugt 100 Gew.-% Maleinsäureanhydrid modifiziertes Polyethylen umfasst.

Es ist ebenfalls ganz besonders bevorzugt, dass Schicht (B) keine Antiblockmittel enthält. Antiblockmittel könnten die Oberflächenrauheit der Schicht (B) stark erhöhen und die Anbindung der Polyurethanschicht verschlechtern. Vor allem aber können solche Antiblockmittel Unebenheiten in der Oberfläche der sehr dünnen Schicht (A) bewirken, und so auch Defekte und insbesondere Pinholes in einer etwaig darauf aufgebrachten Metallschicht oder Metalloxidschicht verursachen. Die Barriereeigenschaften für Sauerstoff und/oder Wasserdampf können sich dadurch verschlechtern.

Die Dicke der Schicht (B) liegt im Allgemeinen im Bereich von 0,3-5 µm, vorzugsweise im Bereich von 0,3-3 µm, insbesondere im Bereich von 0,5 bis 2 µm. Es ist bevorzugt, das Schicht (B) höchstens eine Schichtdicke von 25 % und bevorzugt von höchstens 15 % der Dicke der Folie aufweist. Bei einer 25 µm dicken erfindungsgemäßen Folie beträgt die Dicke dieser Schicht idealerweise etwa 1 bis 2 µm.

### Schicht (C)

Bei Schicht (C) handelt es sich um die Hauptschicht (auch Basisschicht oder Stützschicht genannt). Sie ist vor allem bestimmend für die mechanischen Eigenschaften der erfindungsgemäßen Folie. Durch die biaxiale Orientierung dieser Schicht und die Schichtdicke, trägt sie aber auch erheblich zu den Barriereeigenschaften und den optischen Eigenschaften bei.

Bevorzugt weist Schicht (C) wenigstens eine Schichtdicke von 50 %, bevorzugt von wenigstens 70 % und besonders bevorzugt von wenigstens 80 % der Dicke der Folie auf. Insbesondere liegt die Dicke der Schicht (C) bevorzugt im Bereich von 3 µm bis 45 µm, besonders bevorzugt im Bereich von 5 µm bis 28 µm und am meisten bevorzugt im Bereich von 7 µm bis 20 µm. Bei einer 25 µm dicken erfindungsgemäßen Folie beträgt die Dicke dieser Schicht idealerweise etwa 22 µm.

Solche Folien sind dem Fachmann hinlänglich bekannt. Bevorzugt umfasst Schicht (C) ein Polyethylen-Homopolymer. Es ist weiterhin bevorzugt, das Schicht (C) mehr als 50 Gew.-%, bevorzugt mehr als 80 Gew.-% und besonders bevorzugt mehr als 90 Gew.-% Polyethylen umfasst. Am meisten bevorzugt besteht sie aus Polyethylen-Homopolymer.

### Schicht (D)

Schicht (D) dient dazu, der der Schicht (A) abgewandten Seite der Folie eine günstige Oberflächenbeschaffenheit und insbesondere eine genügende Oberflächenrauheit zu vermitteln, damit die erfindungsgemäße Folie über Walzen transportiert und unter hohen Geschwindigkeiten von Rollen abgewickelt werden kann. Es handelt sich daher um eine übliche "Skin-layer" von Polyethylenfolien. Bevorzugt enthält Schicht (D) ein Polyethylen-Homopolymer. Die Schicht kann aber auch ein Polyethylen-Copolymer enthalten.

Die Menge des in Schicht (D) enthaltenen Antiblockmittels liegt im Allgemeinen im Bereich von 1 bis 10 Gew.-%, bevorzugt im Bereich von 1 bis 7 Gew.-% und besonders bevorzugt im Bereich von 1 bis 6 Gew.-%. Bei zu geringen Mengen ist die Oberfläche zu glatt und die Folie kann nicht gut verarbeitet, und insbesondere nicht gut auf- und wieder abgewickelt werden. Ist die Menge zu groß, stehen zu viele Partikel aus der Oberfläche der Folie heraus. Wird eine auf der gegenüberliegenden Seite mit Metall beschichtete Folie dann aufgewickelt, kommen diese Partikel in Berührung mit der Metallschicht. Sie können sich dann in die Metallschicht (oder Metalloxidschicht) drücken und Defekte und insbesondere Pinholes verursachen, die die Barriereeigenschaften herabsetzen. Es sollte daher eine Menge eingesetzt werden, die so gering wie möglich ist, aber die Verarbeitung noch ermöglicht. Eine geeignete Menge kann für jede Folie leicht durch Vorversuche ermittelt werden. Es können alle bekannten Antiblockmittel eingesetzt werden. Für die Dicke der Schicht (D) gilt das für die Schicht (B) gesagte entsprechend.

Die erfindungsgemäße Folie kann weitere Schichten aufweisen, die zwischen der Schicht (C) und den Schichten (B) und (D) liegen können.

Außerdem können alle Schichten, je nach dem beabsichtigten Verwendungszweck der Folie, verschiedene übliche Zusätze enthalten, die beispielsweise ausgesucht sein können aus der Gruppe bestehend aus mineralischen oder organischen Zusätzen zur Bildung von Mikrohohlräumen, Füllstoffe, Absorptionsmittel, UV und Licht-Schutzmittel, Farbstoffe und deckende Pigmente.

Zur Verwendung in oder als Lebensmittelverpackungen werden Polyethylenfolien häufig zumindest auf einer Seite mit einer Metallschicht oder Metalloxidschicht versehen. Ebenfalls ein Gegenstand der vorliegenden Erfindung ist daher eine erfindungsgemäße Folie die eine Metallschicht oder eine Metalloxidschicht aufweist, die direkt mit der Oberfläche von Schicht (A) verbunden ist. Solche Folien können direkt für Lebensmittelverpackungen eingesetzt werden.

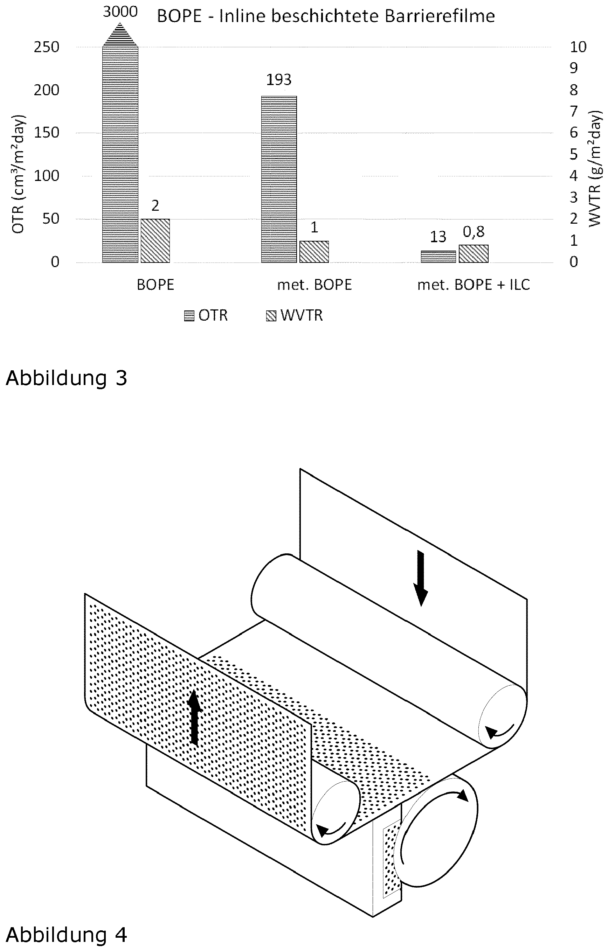

Eine handelsübliche BOPE Folie mit einer Dicke von 18 µm, die lediglich die Schichten (B), (C) und (D) in dieser Reihenfolge aufweist, hat eine Durchlässigkeit für Sauerstoff ("oxygen transmission rate", OTR) von ca. 2000 bis 4000 cm³/m²*d. Durch eine standartmäßige Metallisierung lässt sich dieser Wert auf etwa 200 bis 300 cm³/m²*d reduzieren. Im Vergleich zu solchen "Benchmark-Folien" lässt sich OTR-Wert der metallisierten erfindungsgemäßen Folie durch die erfindungsgemäßen Maßnahmen kostengünstig auf 20 bis 80 cm³/m²*d reduzieren (siehe auch Tabelle 1 und Abbildung 3). D.h. der Einsatz eines nur 100 nm dicken Überzugs (Schicht (A)) reduziert die Sauerstoffdurchlässigkeit der erfindungsgemäßen BOPE Folien um etwa den Faktor 10 im Vergleich zu aktuell erhältlichen BOPE Folien.

Das gleiche gilt bei der Durchlässigkeit für Wasserdampf ("water vapor transmission rate"). Eine handelsübliche BOPE Folie mit einer Dicke von 18 µm, die lediglich die Schichten (B), (C) und (D) in dieser Reihenfolge aufweist, hat eine Durchlässigkeit für Wasser ("water vapor transmission rate", WVTR) von ca. 1 bis 2 g/m²d. Durch eine standartmäßige Metallisierung wird dieser Wert nur relative geringfügig beeinflusst und beträgt etwa 1 bis 1,5 g/m²d reduzieren. Im Vergleich zu solchen "Benchmark-Folien" lässt sich WVTR-Wert der metallisierten erfindungsgemäßen Folie durch die erfindungsgemäßen Maßnahmen kostengünstig auf unter 0,5 g/m²d reduzieren (siehe auch Tabelle 1 und Abbildung 3).

Bevorzugt sind erfindungsgemäße Folien, die eine Sauerstoffdurchlässigkeit im Bereich von 30 bis 70 cm³/m²*d aufweisen. Ferner sind erfindungsgemäße Folien bevorzugt, die eine Durchlässigkeit für Wasserdampf von 0,1 bis 0,5 g/m²*d aufweisen.

Verfahren zum Metallisieren von Kunststofffolien sind dem Fachmann bekannt. Sie können prinzipiell durch Vakuum-Metallisierung, indirekte Metallisierung, zum Beispiel durch Heißfolienprägung, Plattieren und Lackieren erfolgen. Bevorzugt ist die Vakuum-Metallisierung, da sie keine besonderen Eigenschaften oder Vorbereitungen der Folien erfordert und keine oder fast keine Hilfsstoffe benötigt. Die Vakuum-Metallisierung kann entweder durch Standard-Vakuum Metallisierung (Physical Vapor Deposition) oder durch Sputtern (Plasma Enhanced Chemical Vapor Deposition, PE-CVD) durchgeführt werden. Bei der Verwendung von Aluminium wird vorteilhaft die Standard-Vakuum Metallisierung angewendet. Metalloxidschichten können ebenfalls mit bekannten Verfahren aufgebracht werden. Soweit die erfindungsgemäße Folie eine Metalloxidschicht aufweist, handelt es sich bevorzugt um eine Aluminiumoxidschicht oder um eine Siliziumdioxidschicht, die direkt mit der Oberfläche von Schicht (A) verbunden ist. Die Dicke der Schichten unterscheiden sich je nach Material. Für Aluminiumschichten sind Schichtdicken im Bereich von 30 bis 80 nm bevorzugt, besonders bevorzugt sind 40 bis 60 nm und am meisten bevorzugt 40 bis 50 nm. Für Siliciumoxidschichten sind Schichtdicken von 30 bis 80 nm bevorzugt und für Aluminiumoxidschichten 10 bis 20 nm.

Besonders geeignet ist eine erfindungsgemäße Folie mit einer Dicke im Bereich von 5 bis 50 µm, wobei Schicht (A) eine Schichtdicke im Bereich von 50 bis 250 nm aufweist, Schichten (B) und (D) jeweils unabhängig voneinander eine Schichtdicke im Bereich von 0,3-5 µm aufweisen und Schicht (C) eine Schichtdicke im Bereich von 3 µm bis 45 µm aufweist.

Ein weiterer Aspekt der vorliegenden Erfindung ist eine Lebensmittelverpackung umfassend eine erfindungsgemäße Folie.

Ein weiterer Aspekt der vorliegenden Erfindung ist ein Verfahren zur Herstellung einer erfindungsgemäßen Folie, umfassend die Schritte:
- Bereitstellen eines Films, der monoaxial in Längsrichtung verstreckt ist, Schichten (B) bis (D), mit einer Zusammensetzung wie vorstehend beschrieben, umfasst und worin Schichten (B) und (D) Außenschichten des Films sind,
- Aufbringen einer Schicht einer flüssigen Dispersion enthaltend Polyurethan und Nanopartikel auf Schicht (B),
- Trocknen der flüssigen Dispersion unter Herstellung der Schicht (A),
- Recken des Films in Querrichtung unter Herstellung einer biaxial orientierten Folie.

Dieses Verfahren umfasst daher ein sequenzielles Recken. Bevorzugt umfasst dieses Verfahren zur Herstellung einer erfindungsgemäßen Folie, die Schritte:
- Bereitstellen wenigstens der Polymeren für die Schichten (B), (C) und (D), mit einer Zusammensetzung wie vorstehend beschrieben, mit allen Inhaltsstoffen,
- Schmelzen der einzelnen Polymeren,
- Extrudieren der Polymeren aus einer Breitschlitzdüse unter Herstellung eines Films mit wenigstens drei Lagen entsprechend den Schichten (B), (C) und (D), wobei Schichten (B) und (D) Außenschichten des Films sind,
- Kühlen des so entstandenen Films auf einer Kühlrolle unter Herstellung eines Films mit den Schichten (B), (C) und (D),
- Recken des Films in Längsrichtung,
- Aufbringen einer homogenen Schicht einer flüssigen Dispersion enthaltend wenigstens Polyurethan und Nanopartikel auf die Schicht (B)
- Trocknen der flüssigen Dispersion durch Erwärmen unter Herstellung der Schicht (A),
- Recken des Films in Querrichtung unter Herstellung einer biaxial orientierten Folie.

In einem herkömmlichen Verfahren zur Herstellung von biaxial orientierten Polyethylenfolien wird ein Polyethylen-Ausgangsmaterial bereitgestellt, dieses aufgeschmolzen und aus der Schmelze durch Extrusion und Abkühlen der Schmelze ein Castfilm (Primärfilm) herstellt. Dann wird der Castfilm durch Wiedererwärmen auf Recktemperatur gebracht und biaxial in Maschinenrichtung (MD) und Querrichtung (TD) gereckt und zwar entweder sequentiell oder simultan und die gereckte biaxial orientierte Polyethylenfolie wird nach dem Abkühlen aufgewickelt. Beim sequenziellen Recken wird der Castfilm zunächst in Maschinenrichtung (MD) und dann in Querrichtung (TD) gereckt. Nach dem Recken in Längsrichtung weist der Film üblicherweise eine Dicke im Bereich von 200 bis 500 µm auf. Beim simultanen Recken wird der Castfilm gleichzeitig in beiden Richtungen gereckt.

In der vorliegenden Beschreibung werden biaxial orientierte Polyethylen-Folien als Folien bezeichnet, während nicht oder monoaxial orientierte Polyethylen-Filme als Filme bezeichnet werden. Dies wird jedoch nicht strikt befolgt. Die Begriffe Film und Folie sind im Sinne der vorliegenden Erfindung als Synonyme zu verstehen.

Im Vergleich zum herkömmlichen Herstellungsverfahren wird im erfindungsgemäßen Verfahren zusätzlich Schicht (A) aufgebracht. Das Aufbringen des Polyurethans in Form einer Dispersion auf den Film nach dem Recken in Längsrichtung, aber vor dem Recken in Querrichtung führt zu einem sehr einfachen Verfahren, dass gegenüber dem Herstellungsprozess für herkömmliche Folien kaum Mehraufwand mit sich bringt. Es muss kein zusätzlicher Extruder für die Polyurethanschicht eingesetzt werden. Da Filme zum Recken bis in die Nähe ihres Erweichungspunktes erwärmt werden, kann die Entfernung des Lösungsmittels der Dispersion des Polyurethans automatisch durch Verdampfen erfolgen, wenn der Film zum Recken in Querrichtung erwärmt wird. Da Schicht (A) sehr dünn ist, ist die Zeitdauer, die für das Verdampfen des Lösungsmittels benötigt wird, sehr gering. Gleichzeitig werden die Nanopartikel als Inhaltstoffe einer flüssigen Dispersion durch die Flüssigkeit gleichmäßig über die Oberfläche der Schicht (A) verteilt. Das Aufbringen der Polyurethanschicht kann daher inline zum Beispiel in einer Bandstraße durch Beschichten erfolgen und der Aufwand ist sehr gering.

Die Polyurethandispersion kann aber auch vor einen Reckvorgang in Längsrichtung aufgebracht werden, wie in den folgenden ebenfalls erfindungsgemäßen Verfahren beschrieben sind:
Verfahren zur Herstellung einer erfindungsgemäßen Folie, umfassend die Schritte:
- Bereitstellen eines Films umfassend Schichten (B) bis (D) mit einer Zusammensetzung wie vorstehend beschrieben, in der die Schichten (B) bis (D) nicht orientiert sind (Primärfilm) und Schichten (B) und (D) Außenschichten des Films sind,
- Aufbringen einer flüssigen Dispersion enthaltend Polyurethan und Nanopartikel auf die Schicht (B),
- Trocknen der flüssigen Dispersion durch Erwärmen unter Herstellung der Schicht (A),
- Simultanes Recken des Films in Längsrichtung und in Querrichtung unter Herstellung einer biaxial orientierten Folie.

Bevorzugt ist das vorstehende Verfahren zur Herstellung einer erfindungsgemäßen Folie, umfassend die Schritte:
- Bereitstellen wenigstens der Polymeren für die Schichten (B), (C) und (D), mit einer Zusammensetzung wie vorstehend beschrieben, mit allen Inhaltsstoffen,
- Schmelzen der einzelnen Polymeren,
- Extrudieren der Polymeren aus einer Breitschlitzdüse unter Herstellung eines Films mit wenigstens drei Schichten entsprechend den Schichten (B), (C) und (D), wobei Schichten (B) und (D) Außenschichten sind,
- Kühlen des so entstandenen Films auf einer Kühlrolle unter Herstellung eines Films mit den Schichten (B), (C) und (D),
- Aufbringen einer flüssigen Dispersion enthaltend wenigstens ein Polyurethan und Nanopartikel auf die Schicht (B),
- Trocknen der flüssigen Dispersion durch Erwärmen unter Herstellung der Schicht (A),
- Simultanes Recken des Films in Längsrichtung und in Querrichtung unter Herstellung einer biaxial orientierten Folie.

Zum Schmelzen und extrudieren der Polymeren können jeweils zum Beispiel Einschneckenextruder oder Doppelschneckenextruder verwendet werden.

In einer dritten Version des erfindungsgemäßen Verfahrens wird eine Kombination der vorstehenden erfindungsgemäßen Verfahren verwendet. Dabei wird der Film zunächst in Längsrichtung gereckt, dann die flüssige Dispersion aufgetragen und dann noch einmal simultan gereckt.

Bevorzugt ist jedoch das zuerst angegebene Verfahren, bei dem sequenzielles Recken angewendet wird, da dabei weniger flüssige Dispersion aufgetragen werden muss, als wenn simultan gereckt wird. Das beschleunigt das Verfahren und senkt die Kosten.

Die Dispersion enthält neben den Nanopartikeln und dem Polyurethan noch ein Lösungsmittel. Bevorzugt enthält die flüssige Dispersion 0,5 bis 20 Gew.-%, bevorzugt 1 bis 10 Gew.-% und besonders bevorzugt 2 bis 7 Gew.-% Nanopartikel, bezogen auf die Trockenmasse der flüssigen Dispersion. Die Trockenmasse wird dabei dadurch bestimmt, dass die flüssige Dispersion bei 130 °C bis zur Gewichtskonstanz getrocknet wird. Der Rückstand stellt dann die Trockenmasse dar. Die in diesem Verfahren für die flüssige Dispersion verwendeten Lösungsmittel weisen daher bevorzugt einen Siedepunkt von 140 °C oder weniger, besonders bevorzugt von 130 °C oder weniger und ganz besonders bevorzugt von 120 °C oder weniger auf und am meisten bevorzugt von 100 °C oder weniger auf.

Die flüssige Dispersion enthält typischerweise 80 bis 99,5 Gew.-%, bevorzugt 90 bis 99 Gew.-% und besonders bevorzugt 93 bis 96 Gew.-% Polyurethan, bezogen auf die Trockenmasse der flüssigen Dispersion. Die Trockenmasse enthält dabei neben Polyurethan zumindest noch die Nanopartikel und kann daneben weitere Hilfsstoffe enthalten. Weiterhin enthält die flüssige Dispersion typischerweise 5 bis 25 Gew.-%, bevorzugt 10 bis 20 Gew.-% und besonders bevorzugt 12 bis 18 Gew.-% Trockenmasse. Bevorzugt ist die flüssige Dispersion eine wässrige Dispersion. Besonders bevorzugt ist Wasser das einzige verwendete Lösungsmittel der flüssigen Dispersion. Zusätzlich kann die Dispersion Vernetzungsmittel enthalten. Die Vernetzungsmittel können in Mengen von bis zu 3 Gew.-%, bevorzugt bis zu 1 Gew.-% der Trockenmasse der Dispersion ausmachen. Bei dem Vernetzungsmittel handelt es sich bevorzugt um ein polyfunktionales Aziridin-Vernetzungsmittel.

Als Polyurethan kommt bevorzugt die Polyurethan-Dispersion Takelac WPB-341 von Mitsui Chemical zum Einsatz. Es ist ein speziell modifiziertes Polyurethan, das im Gegensatz zu konventionellen Polyurethanen eine deutlich erhöhte Sauerstoffbarriere aufweist. Bisher wurde das Material nur im "Offline-Coating" Sektor verwendet um Gasbarrieren von Solarzellen oder speziellen Verpackungen zu erhöhen. Für den Inline Prozess mit anschließender Verstreckung wurde das Material zuvor noch nie verwendet. Es ist weiter bevorzugt, dass der Polyurethan-Dispersion und insbesondere der Polyurethan-Dispersion Takelac WPB-341 Nanopartikel Levasil 30/50 der Firma Akzonobel in einer Menge von 3 bis 5 % zugesetzt werden.

Bevorzugt ist ein erfindungsgemäßes Verfahren in dem das Trocknen der flüssigen Dispersion gleichzeitig mit dem Verstrecken des Films in Querrichtung erfolgt oder in dem das Trocknen der flüssigen Dispersion gleichzeitig mit dem Vorheizen der Filme für das simultane Verstrecken der Filme in Längs- und Querrichtung erfolgt. Zum Recken werden Polyethylen-Filme üblicherweise in der Vorheizzone des Reckofens auf eine Temperatur im Bereich von 120 °C bis 135 °C, bevorzugt im Bereich von 125 bis 130 °C erwärmt, um den Film auf Strecktemperatur zu bringen, um ihre Dehnbarkeit zu erhöhen. Durch das Erwärmen des Films in der Vorheizzone kann gleichzeitig die darauf befindliche Dispersion getrocknet werden, wodurch sich Schicht (A) bildet. Ein zusätzlicher Verfahrensschritt zum Trocknen der Dispersion erübrigt sich daher. Bei diesen Temperaturen werden die in den verschiedenen Schichten enthaltenen Polymeren genügend erwärmt, um sie in einen für das Recken günstigen Zustand zu bringen. Ferner wird bei diesen Temperaturen die Polyurethan-Schicht (A) zu einem einheitlichen Film verschmolzen, so dass er beim Recken nicht aufreißt. Schließlich ist die Temperatur noch gering genug, dass die Polyethylen-Schicht (B) nicht so dünnflüssig wird, dass Sie sich von den benachbarten Schichten löst.

Das Auftragen der flüssigen Dispersion auf die Schicht (B) erfolgt bevorzugt im Reverse Gravur Kiss Coating Verfahren und besonders bevorzugt durch einen "reverse gravure coater" mittels "kiss coating". In Abbildung 4 wird schematisch gezeigt, wie dieses Verfahren durchgeführt wird. Der Film wird durch zwei Führungsrollen über die Gravurwalze geführt, die sich entgegen der Bewegungsrichtung des Films dreht. Die Druckerwalze wird durch ein Reservoir mit der wässrigen Dispersion (gepunktet) beladen. Dieses Verfahren erlaubt das gleichmäßige Auftragen der flüssigen Dispersion bei sehr hohen Verarbeitungsgeschwindigkeiten. Dabei beträgt der Feststoffanteil der flüssigen Dispersion bevorzugt 5 bis 20 Gew.-%, besonders bevorzugt 10 bis 20 Gew.-% und idealerweise 15 Gew.-%, jeweils bezogen auf die Gesamtmasse der flüssigen Dispersion. Die durch die flüssige Dispersion auf Schicht (B) gebildete Nassschicht hat bevorzugt eine Masse von 3 bis 20 g/m² und besonders bevorzugt 6 bis 10 g/m². Ganz besonders bevorzugt beträgt der Feststoffanteil der flüssigen Dispersion 10 bis 20 Gew.-% und die gebildete daraus gebildete Nassschicht hat eine Masse von 6 bis 10 g/m². Beim Aufbringen der flüssigen Dispersion weist die flüssige Dispersion bevorzugt eine Temperatur von nicht mehr als 100°C, bevorzugt von nicht mehr als 70°C und besonders bevorzugt von nicht mehr als 40°C auf. Bei hohen Temperaturen kann die Flüssigkeit kochen und/oder die Inhaltsstoffe können sich zersetzen. Üblicherweise werden Druckvorgänge bei Raumtemperatur durchgeführt und die Einhaltung dieser Temperatur sollte kein Problem darstellen. Sollte die Folie jedoch direkt anschließend an ihre Herstellung mit der Schicht (A) versehen werden, so muss darauf geachtet werden, dass sie vor dem Aufbringen der Schicht (A) genügend gekühlt wird.

Es ist weiter bevorzugt, dass die Oberfläche der Schicht (B) vor dem Aufbringen der flüssigen Dispersion einer Oberflächenbehandlung unterzogen wird. Bei dieser Oberflächenbehandlung handelt es sich bevorzugt um eine Oberflächenbehandlung ausgesucht aus der Gruppe bestehend aus Corona-Behandlung, Plasmabehandlung und Flammbehandlung. Am meisten bevorzugt ist eine Corona-Behandlung. Eine solche Oberflächenbehandlung der Schicht (B) verbessert die Haftung der Schichten (A) und (B) aneinander. Da der Kristallisationsgrad des Films vor dem Recken in Querrichtung noch relativ gering ist, ist die Vorbehandlung mittels Corona-Behandlung, Plasmabehandlung und Flammbehandlung effektiver als bei herkömmlichen Filmen, die nach dem Querrecken behandelt werden. Auch die Menge der Polyurethan-Dispersion ist bei dem Aufbringen vor dem Querrecken um ein vielfaches geringer. So beträgt bei einer Filmbreite von typischerweise 30 cm bis 1,5 m nach dem Längsrecken die Folienbreite nach den Querrecken typischerweise 8-11 m. Es müsste daher eine viel größere Menge an flüssiger Dispersion aufgetragen werden, um eine gleichmäßige Beschichtung zu erzielen.

Bevorzugt ist ebenfalls ein erfindungsgemäßes Verfahren, dadurch gekennzeichnet, dass die Kühlwalze eine Temperatur im Bereich von 20 bis 40°C aufweist.

Zum Querrecken wird bevorzugt ein üblicher Reckofen verwendet, der zumindest eine Vorheizzone aufweist. Im vorliegenden Verfahren muss die Vorheiztemperatur in der Vorheizzone des Reckofens so eingestellt werden, dass die Polyurethandispersion im Wesentlichen trocknet und zu einer einheitlichen Schicht verschmilzt, bevor das eigentliche Recken beginnt. Hierzu muss gegebenenfalls die Vorheiztemperatur höher eingestellt werden als dies üblicherweise der Fall ist. Bevorzugt ist die Vorheiztemperatur um 2 bis 15 °C und besonders bevorzugt um 3 bis 10 °C höher. Wenn die flüssige Dispersion vor dem Recken nicht genügend getrocknet ist, kann die Schicht (A) Defekte und insbesondere Pinholes aufweisen. Wenn die Oberflächenspannung über die gesamte Oberfläche der Schicht (A) gleichmäßig hoch ist, liegt eine homogene Beschichtung vor. Entsprechend können auch die Sauerstoffdurchlässigkeit oder die Wasserdampfdurchlässigkeit als Maß für die genügende Trocknung und Verschmelzung verwendet werden. Führt eine längere Trocknung oder eine Trocknung bei höherer Temperatur nicht mehr zu einer Verbesserung diese Werte, so ist für diesen Film und dieses Herstellungsverfahren die Trocknungstemperatur ausreichend.

Bevorzugt liegt das Reckverhältnis in Längsrichtung im Bereich von 2 bis 8. Das Reckverhältnis in Querrichtung liegt bevorzugt im Bereich von 4 bis 10. Weiterhin ist es bevorzugt, dass das Reckverhältnis beim sequenziellen Recken in Längsrichtung im Bereich von 2 bis 8, bevorzugt im Bereich von 3 bis 7 und besonders bevorzugt im Bereich von 4 bis 6 liegt. Das Reckverhältnis in Querrichtung liegt beim sequenziellen Recken bevorzugt im Bereich von 4 bis 10, besonders bevorzugt im Bereich von 6 bis 10 und ganz besonders bevorzugt im Bereich von 6 bis 9. Im Verfahren mit simultanen Recken beträgt die Reckrate bevorzugt 35 bis 60, besonders bevorzugt 40 bis 55 und ganz besonders bevorzugt 40 bis 50. Ebenfalls vorteilhaft ist es, wenn das Anlegen der Schmelze auf die Kühlwalze durch ein sogenanntes Air-Knife unterstützt wird.

An der Folie kann weiter nach dem Recken eine Relaxierung in Längsrichtung oder in Querrichtung oder in beiden Richtungen vorgenommen werden.

Kurze Beschreibung der Abbildungen:
- Abbildung 1:: Abbildung 1 gibt den Aufbau der erfindungsgemäßen Folien mit Schichten (A) bis (D) wieder.
- Abbildung 2A:: Abbildung 2A gibt den Aufbau einer herkömmlichen Polyethylenfolie wieder mit einer Trageschicht und zwei Außenschichten (SkinLayer), von denen eine Antiblockmittel enthält.
- Abbildung 2B:: Abbildung 2B gibt den Aufbau einer erfindungsgemäßen Folie wieder, mit der zusätzlichen Schicht (A), die Nanopartikel enthält. Die Partikel in den Schichten sind kenntlich gemacht.
- Abbildung 3:: Abbildung 3 zeigt einen Vergleich der Sauerstoff- und der Wasserdampf-Barriereeigenschaften von herkömmlichen Polyethylenfolien (BOPE), metallisierten BOPE Folien (met. BOPE) und erfindungsgemäßen Folien mit inline erzeugter Polyurethan-Beschichtung und offline erzeugter Metallschicht mit besonders guten Barriereeigenschaften (met. BOPE + ILC) wieder. Die ganz linke Säule ist verkürzt dargestellt (siehe Tabelle 1).
- Abbildung 4:: Abbildung 4 zeigt eine schematische Darstellung eines Reverse Gravur Kiss coating Prozesses, wie er im vorliegenden Verfahren verwendet wird. Die gepunkteten Bereiche auf der Folie zeigen den einseitig beschichteten Teil der Folie. Ferner ist die flüssige Dispersion in dem Reservoir gepunktet wiedergegeben.

### Beispiele:

### Materialien:

Takelac WPB 341 ist eine wässrige Dispersion der Firma Mitsui Chemicals mit 30 % Polyurethan-Gehalt. Levasil CT3 PL (auch "PL Levasil 30/50" genannt) ist eine wässrige Dispersion von kolloidalem Siliciumdioxid der Firma Akzonobel mit einem Gehalt an kolloidalem Siliciumdioxid von 50 Gew.-% (Teilchengröße 80-100 nm; spez. Oberfläche 35 m²/g; BET-Oberfläche: 40 m²/g). Admer NF-408E ist ein Polyethylen-Homopolymer mit aufgepfropften Maleinsäureanhydrid-Gruppen mit einen MFR von 3 g/10 min bei 190°C und einem Gewicht von 2,16 kg (ASTM D 1238), einer Dichte von 0,92 g/cm³, einer Vicat Erweichungstemperatur von 100 °C (D1525) und einem Schmelzpunkt von 120 °C. Bei "Constab AB 06001 LD" handelt es sich um ein Low-density Polyethylen mit einem Anteil von 4 Gew.-% eines synthetischen Siliziumdioxids bezogen auf das Gesamtgewicht des "Constab AB 06001 LD". Die Partikel des Siliziumdioxids weisen eine Teilchengröße von 4 µm auf. Das Produkt ist erhältlich von der "CONSTAB Polyolefin Additives GmbH", Rüthen, Germany.

Die Messung von Teilchengrößen erfolgt durch Laserbeugungs-Partikelgrößenanalyse.

### Beispiel 1:

Zur Herstellung einer erfindungsgemäßen Folie werden ein LLDPE mit einem MFR von 2,1 g/ 10 min bei 190 °C (ISO 1133), einer Dichte von 0,92 g/cm³ (ASTM D1505) und einem Schmelzpunkt von 126°C und 5 Gew.-% "Constab AB 06001 LD" bezogen auf das Gewicht der Mischung gemischt. LLDPE mit einem MFR von 2,1 (ISO 1133), einer Dichte von 0,92 g/cm³ (ASTM D1505) und einem Schmelzpunkt von 126°C für die Schicht (C) und die vorstehend genannte Mischung für die Schicht (D) werden getrennt in je einem Extruder bei 220 bis 250 °C geschmolzen. Admer NF-408E wird für die Schicht (B) bei einer Temperatur von 220-250 °C geschmolzen. Die vorgenannten Materialien werden mittels einer Breitschlitzdüse extrudiert. Schichten (B) bis (D) werden jeweils getrennt mit Doppelschneckenextruder extrudiert. Die durch die Breitschlitzdüse extrudierte Schmelze wird mit Hilfe einer Kühlrolle abgekühlt und so einen Castfilm erhalten. Dieser Castfilm wird bei einer Film-Geschwindigkeit von 10 m/min in einer Reckanlage in Längsrichtung mit einem Reckverhältnis von 5 gereckt. Dabei haben die Vorheizwalzen Temperaturen im Bereich von 60 bis 92 °C, die Streckwalzen Temperaturen im Bereich von 95 bis 105 °C und die Annealingwalzen Temperaturen im Bereich von 78 bis 105 °C.

Nach den Recken in Längsrichtung weist der Film eine Geschwindigkeit von 50 m/min auf. Nach dem Abkühlen des so entstandenen monoaxial orientierten Films (MOPE Film), wird die Oberfläche der Schicht (B) des Films zunächst einer üblichen Corona-Behandlung unterzogen.

Dadurch wird die Benetzung der Filmoberfläche durch das Polyurethan verbessert. Anschließend wird auf die Schicht (B) eine wässrige Polyurethan-Dispersion als Beschichtungs-Material mittels "Reverse Gravur Kiss Coating" mit Hilfe eines "reverse gravure coaters", auf den MOPE Film aufgetragen. Hierzu werden gravierte Walzen verwendet die Vertiefungen aufweisen, die bei jeder Umdrehung mit der Dispersion gefüllt werden. Beim Kontakt mit der Filmbahn wird ein Teil der Flüssigkeit auf den Film übertragen. Durch eine gegenläufige Rotation der Walze gegen die Bewegungsrichtung des Films entsteht ein gleichmäßiger Benetzungsbereich auf der Filmbahn. Zum Einsatz kommt hierbei eine 12 g/m² Gravurwalze, die eine Nassschicht mit 12 g wässriger Dispersion pro Quadratmeter Filmoberfläche erzeugt. Die zur Beschichtung verwendete Dispersion besteht aus 48 Gew.-% Takelac WPB 341, 1,2 Gew.-% Levasil 30/50 und 50,8 Gew.-% Wasser, jeweils bezogen auf die Gesamtmasse der Dispersion.

Anschließend wird der Film in einem Reckofen in Querrichtung mit einem Reckverhältnis von 8,5 gereckt, wobei die Vorheizzone eine Lufttemperatur im Bereich von 144 bis 160 °C aufweist und so bei dem Vorheizen im Reckofen die wässrige Polyurethan-Dispersion vor dem Recken unter Bildung einer Polyurethan-Schicht (A) getrocknet wird. Die Streckzonen weisen Temperaturen von 138 bis 156 °C auf und die Annealingzone weist eine Temperatur im Bereich von 128 bis 138 °C auf. Bei allen hier angegebenen Temperaturen handelt es sich um die Temperatur der Luft in den entsprechenden Zonen des Reckofens. Anschließend wird die Folie in einem weiteren Offline-Verfahren metallisiert. Als Metall wird Aluminium verwendet, welches durch Standard-Vakuum Metallisierung (PVD) aufgetragen wird. Die Schichtdicke beträgt 45 nm und die optische Dichte der Schicht 2,5.

Es wird eine Folie mit den folgenden Eigenschaften erhalten:
Schichtdicken: Gesamtfolie 20 µm (nach DIN 53370), Schicht (A) 100 nm, Schichten (B) und (D) 1 µm, Schicht (C) 18 µm, Metallschicht (M) 45 nm; Zerreißfestigkeit (ASTM D 882) MD: 62 N/mm², TD: 204 N/mm²; Bruchdehnung (ASTM D 882) MD: 430 %, TD: 56 %; Elastizitätsmodul (ASTM D 882) MD: 280 N/mm², TD: 444 N/mm²; Reibungskoeffizient (DIN EN ISO 8295, U/U) MD: 0,58 µS, TD: 0,53 µk; Wärmeschrumpf (BMS TT 0,2; 100 °C/10 min) MD: 3,9 %, TD 3,6 %; Sauerstoffdurchlässigkeit (ISO 15105-2) <13 cm³/(m²dbar) (bei 23°C und 0% relative Luftfeuchtigkeit); Wasserdurchlässigkeit (ASTM E 96) 0,8 g/(m²d) (bei 38°C und 90% relative Luftfeuchtigkeit); Metallhaftung (Klebebandtest, TP-104-87) 5/5, (EAA sealing, AIMCAL Prozess TP-105-92 für die Adhäsion von metallisierten Filmen, N/15mm) >5, kein Ablösen des Metalls.

Wie man diesen Werten entnehmen kann, sind die mechanischen Eigenschaften der erfindungsgemäßen Folien ähnlich denen der handelsüblichen Barrierefolien. Die Sauerstoffdurchlässigkeit und die Wasserdampfdurchlässigkeit sind jedoch stark reduziert. Dies führt bei der Verwendung zu einer verlängerten Haltbarkeit von damit verpackten Lebensmitteln.

Abbildung 3 zeigt die Sauerstoffdurchlässigkeit ("OTR", "oxygen transmission rate") und die Durchlässigkeit für Wasserdampf ("WVTR", "water vapor transmission rate") für eine metallisierte Folie gemäß Beispiel 1 ("met. BOPE + ILC, metallisierte biaxial orientierte Polyethylenfolie mit inline Coating, ganz rechts), für eine handelsübliche nicht-metallisierte biaxial orientierte Polyethylenfolie mit gleicher Dicke ("BOPE", ganz links, die ganz linke Säule ist verkürzt dargestellt (siehe Tabelle 1, siehe auch Abbildung 2A für eine schematische Darstellung dieser Folie) und für dieselbe Folie mit Metallisierung ("met. BOPE", in der Mitte). Wie man sieht, wird die Sauerstoffdurchlässigkeit durch die erfindungsgemäße Folie gegenüber der handelsüblichen metallisierten BOPE Folie noch einmal dramatisch reduziert, ohne dass bei der Herstellung ein großer zusätzlicher Aufwand anfällt. Die Sauerstoffdurchlässigkeit wird mehr als um den Faktor 10 reduziert. Die Durchlässigkeit für Wasserdampf wird ebenfalls reduziert.

**Tabelle 1 zeigt die numerischen Daten der Folien:**

| | Sauerstoff-durchlässigkeit [cm³/m²*day] | Durchlässigkeit für Wasserdampf [g/m²*day] |
|---|---|---|
| BOPE | 3000* | 2 |
| met. BOPE | 193 | 1 |
| met. BOPE + ILC | 13 | 0, 8 |

| | | |
|---|---|---|
| * In Abbildung 3 verkürzt dargestellt. | | |

Auch ist die Metallhaftung außerordentlich hoch und fast einzigartig für eine metallisierte biaxial orientierte Polypropylenfolie.

## Patentansprüche

1. Polyethylenfolie umfassend 4 Schichten (A) bis (D), die in der Reihenfolge von (A) bis (D) angeordnet sind, worin Schichten (B) bis (D) biaxial orientiertes Polyethylen umfassen und worin
Schicht (A) Polyurethan und Nanopartikel umfasst und eine Schichtdicke von 25 bis 300 nm (nach DIN 53370) aufweist, wobei die durch Laserbeugungs-Partikelgrößenanalyse bestimmte mittlere Teilchengröße der Nanopartikel im Bereich von 20 bis 300 nm liegt und nicht mehr als 20 % größer als die Dicke der Schicht (A) ist,
Schicht (B) Polymere mit funktionellen Gruppen umfasst, welche mit Polyurethan kovalente Bindungen ausbilden können und direkt mit Schicht (A) verbunden ist, wobei es sich bei dem Polymer, welches die funktionellen Gruppen umfasst, welche mit Polyurethan kovalente Bindungen ausbilden können, um das in Schicht (B) enthaltene Polyethylen handeln kann,
Schicht (C) wenigstens eine Schichtdicke von 50 % der Gesamtdicke der Folie aufweist und
Schicht (D) eine Außenschicht der Folie darstellt und Antiblockmittel umfasst.

2. Folie nach Anspruch 1, **dadurch gekennzeichnet, dass** Schichten (B) bis (D) jeweils wenigstens 70 Gew.-% Polyethylen enthalten, jeweils bezogen auf die Gesamtmasse der Schicht.

3. Folie nach einem der Ansprüche 1 oder 2, **dadurch gekennzeichnet, dass** Schicht (A) eine Schichtdicke im Bereich von 50 bis 250 nm aufweist.

4. Folie nach einem der Ansprüche 1, 2 oder 3, **dadurch gekennzeichnet, dass** Schicht (A) Nanopartikel aus amorphen Siliciumdioxid aufweist.

5. Folie nach einem der vorangehenden Ansprüche, **dadurch gekennzeichnet, dass** Schicht (A) Nanopartikel aufweist, deren mittlere Teilchengröße im Bereich von 20 bis 150 nm liegt.

6. Folie nach einem der vorangehenden Ansprüche, **dadurch gekennzeichnet, dass** Schicht (A) 0,5 bis 20 Gew.-% Nanopartikel enthält.

7. Folie nach einem der vorangehenden Ansprüche, **dadurch gekennzeichnet, dass** Schicht (B) ein Maleinsäureanhydrid modifiziertes Polyethylen umfasst.

8. Folie nach einem der vorangehenden Ansprüche, **dadurch gekennzeichnet, dass** Schicht (B) keine Antiblockmittel enthält.

9. Folie nach einem der vorangehenden Ansprüche, **dadurch gekennzeichnet, dass** sie eine Metallschicht oder eine Metalloxidschicht aufweist, die direkt mit der Oberfläche von Schicht (A) verbunden ist.

10. Folie nach einem der vorangehenden Ansprüche, **dadurch gekennzeichnet, dass** sie eine Aluminiumoxidschicht oder eine Siliziumdioxidschicht aufweist, die direkt mit der Oberfläche von Schicht (A) verbunden ist.

11. Lebensmittelverpackung umfassend eine Folie nach einem der vorangehenden Ansprüche.

12. Verfahren zur Herstellung einer Folie nach einem der Ansprüche 1 bis 10, umfassend die Schritte:
- Bereitstellen eines Films, der monoaxial in Längsrichtung verstreckt ist, Schichten (B) bis (D),mit einer Zusammensetzung wie in einem der Ansprüche 1 bis 8 beschrieben, umfasst und worin Schichten (B) und (D) Außenschichten des Films sind,
- Aufbringen einer Schicht einer flüssigen Dispersion enthaltend Polyurethan und Nanopartikel auf Schicht (B),
- Trocknen der flüssigen Dispersion unter Herstellung der Schicht (A),
- Recken des Films in Querrichtung unter Herstellung einer biaxial orientierten Folie.

13. Verfahren zur Herstellung einer Folie nach einem der Ansprüche 1 bis 10, umfassend die Schritte:
- Bereitstellen eines Films umfassend Schichten (B) bis (D),mit einer Zusammensetzung wie in einem der Ansprüche 1 bis 8 beschrieben, in der die Schichten (B) bis (D) nicht orientiert sind und Schichten (B) und (D) Außenschichten des Films sind,
- Aufbringen einer flüssigen Dispersion enthaltend Polyurethan und Nanopartikel auf die Schicht (B),
- Trocknen der flüssigen Dispersion durch Erwärmen unter Herstellung der Schicht (A),
- Simultanes Recken des Films in Längsrichtung und in Querrichtung unter Herstellung einer biaxial orientierten Folie.

14. Verfahren nach einem der Ansprüche 12 oder 13, **dadurch gekennzeichnet, dass** die Oberfläche der Schicht (B) vor dem Aufbringen der flüssigen Dispersion einer Oberflächenbehandlung unterzogen wird, welche bevorzugt eine Corona-Behandlung ist.

15. Verfahren nach einem der Ansprüche 12 bis 14, **dadurch gekennzeichnet, dass** die flüssige Dispersion durch Inline-Coating, bevorzugt im Reverse Gravur Kiss Coating Verfahren auf Schicht (B) aufgetragen wird.

16. Verfahren nach einem der Ansprüche 12 bis 15, **dadurch gekennzeichnet, dass** die durch die flüssige Dispersion auf Schicht (B) gebildete Nassschicht eine Masse von 3 bis 20 g/m² und besonders bevorzugt 6 bis 10 g/m² aufweist.

17. Verfahren nach einem der Ansprüche 12 bis 16, **dadurch gekennzeichnet, dass** die flüssige Dispersion eine wässrige Dispersion ist.

18. Verfahren gemäß einem der Ansprüche 12 bis 17, **dadurch gekennzeichnet, dass** das Reckverhältnis in Längsrichtung im Bereich von 2 bis 8 liegt.

19. Verfahren gemäß einem der Ansprüche 12 bis 18, **dadurch gekennzeichnet, dass** das Reckverhältnis in Querrichtung im Bereich von 4 bis 10 liegt.

## Claims

1. Polyethylene foil comprising 4 layers (A) to (D) arranged in the order of (A) to (D), wherein layers (B) to (D) comprise biaxially oriented polyethylene and wherein
layer (A) comprises polyurethane and nanoparticles and has a layer thickness of 25 to 300 nm, wherein the average particle size of the nanoparticles determined by laser diffraction particle size analysis is in the range of 20 to 300 nm and is not more than 20% larger than the thickness of layer (A),
layer (B) comprises polymers having functional groups, which can form covalent bonds with polyurethane and is directly connected to layer (A), wherein the polymer comprising the functional groups capable of forming covalent bonds with polyurethane may be the polyethylene contained in layer (B),
layer (C) has at least a layer thickness of 50% of the total thickness of the foil, and
layer (D) represents an outer layer of the foil and comprises antiblocking agents.

2. Foil according to claim 1, **characterised in that** layers (B) to (D) each contain at least 70 wt.% of polyethylene, in each case based on the total mass of the layer.

3. Foil according to either claims 1 or claim 2, **characterised in that** layer (A) has a layer thickness in the range of from 50 to 250 nm.

4. Foil according to either claim 1, claim 2 or claim 3, **characterised in that** layer (A) comprises nanoparticles consisting of amorphous silicon dioxide.

5. Foil according to any of the preceding claims, **characterised in that** layer (A) comprises nanoparticles of which the average particle size is in the range of from 20 to 150 nm.

6. Foil according to any of the preceding claims, **characterised in that** layer (A) contains 0.5 to 20 wt.% of nanoparticles.

7. Foil according to any of the preceding claims, **characterised in that** layer (B) comprises a maleic anhydridemodified polyethylene.

8. Foil according to any of the preceding claims, **characterised in that** layer (B) contains no antiblocking agents.

9. Foil according to any of the preceding claims, **characterised in that** it comprises a metal layer or a metal oxide layer which is directly bonded to the surface of layer (A).

10. Foil according to any of the preceding claims, **characterised in that** it comprises an aluminium oxide layer or a silicon dioxide layer which is directly bonded to the surface of layer (A).

11. Food packaging comprising a foil according to any of the preceding claims.

12. Method for producing a foil according to any of claims 1 to 10, comprising the following steps:
- providing a film which is monoaxially stretched in the longitudinal direction, comprises layers (B) to (D) which have a composition as per any of claims 1 to 8, and wherein layers (B) and (D) are outer layers of the film,
- applying a layer of a liquid dispersion containing polyurethane and nanoparticles to layer (B),
- drying the liquid dispersion to produce layer (A),
- stretching the film in the transverse direction to produce a biaxially oriented foil.

13. Method for producing a foil according to any of claims 1 to 10, comprising the following steps:
- providing a film comprising layers (B) to (D), which have a composition as described in any of claims 1 to 8, in which the layers (B) to (D) are not oriented and layers (B) and (D) are outer layers of the film,
- applying a liquid dispersion containing polyurethane and nanoparticles to layer (B),
- drying the liquid dispersion by means of heating to produce layer (A),
- simultaneously stretching the film in the longitudinal direction and in the transverse direction to produce a biaxially oriented foil.

14. Method according to either claim 12 or claim 13, **characterised in that,** before applying the liquid dispersion, the surface of layer (B) is subjected to a surface treatment, which is preferably a corona treatment.

15. Method according to any of claims 12 to 14, **characterised in that** the liquid dispersion is applied to layer (B) via inline coating, preferably using the reverse gravure kiss coating method.

16. Method according to any of claims 12 to 15, **characterised in that** the wet layer formed by the liquid dispersion on layer (B) has a mass of 3 to 20 g/m² and particularly preferably 6 to 10 g/m².

17. Method according to any of claims 12 to 16, **characterised in that** the liquid dispersion is an aqueous dispersion.

18. Method according to any of claims 12 to 17, **characterised in that** the stretching ratio in the longitudinal direction is in the range of from 2 to 8.

19. Method according to any of claims 12 to 18, **characterised in that** the stretching ratio in the transverse direction is in the range of from 4 to 10.

## Revendications

1. Feuille de polyéthylène comprenant 4 couches (A) à (D) qui sont agencées dans l'ordre allant de (A) à (D), dans laquelle les couches (B) à (D) comprennent du polyéthylène à orientation biaxiale et dans laquelle
la couche (A) comprend du polyuréthane et des nanoparticules et présente une épaisseur allant de 25 à 300 nm (selon DIN 53370), la taille moyenne des nanoparticules déterminée par granulométrie laser se situant dans la plage allant de 20 à 300 nm et n'est pas supérieure à plus de 20 % de l'épaisseur de la couche (A),
la couche (B) comprend des polymères à groupes fonctionnels susceptibles de former des liaisons covalentes avec le polyuréthane et liés directement à la couche (A), ledit polymère comprenant les groupes fonctionnels susceptibles de former des liaisons covalentes avec le polyuréthane pouvant consister en le polyéthylène renfermé par la couche (B),
la couche (C) présente au moins une épaisseur faisant 50 % de l'épaisseur totale de la feuille, et
la couche (D) représente une couche extérieure de la feuille et comprend des agents antiadhérents.

2. Feuille selon la revendication 1, **caractérisée en ce que** les couches (B) à (D) renferment chacune au moins 70 % en poids de polyéthylène, eu égard respectivement à la masse totale de la couche.

3. Feuille selon l'une des revendications 1 et 2, **caractérisée en ce que** la couche (A) présente une épaisseur située dans la plage allant de 50 à 250 nm.

4. Feuille selon l'une des revendications 1, 2 et 3, **caractérisée en ce que** la couche (A) présente des nanoparticules de dioxyde de silicium amorphe.

5. Feuille selon l'une des revendications précédentes, **caractérisée en ce que** la couche (A) présente des nanoparticules dont la taille moyenne se situe dans la plage allant de 20 à 150 nm.

6. Feuille selon l'une des revendications précédentes, **caractérisée en ce que** la couche (A) renferme de 0,5 à 20 % en poids de nanoparticules.

7. Feuille selon l'une des revendications précédentes, **caractérisée en ce que** la couche (B) comprend un polyéthylène modifié à l'anhydride maléique.

8. Feuille selon l'une des revendications précédentes, **caractérisée en ce que** la couche (B) ne renferme aucun agent antiadhérent.

9. Feuille selon l'une des revendications précédentes, **caractérisée en ce qu'elle** présente une couche métallique ou une couche d'oxyde métallique en liaison directe avec la surface de la couche (A).

10. Feuille selon l'une des revendications précédentes, **caractérisée en ce qu'elle** présente une couche d'oxyde d'aluminium ou une couche d'oxyde de silicium en liaison directe avec la surface de la couche (A).

11. Emballage pour produit alimentaire comprenant une feuille selon l'une des revendications précédentes.

12. Procédé de fabrication d'une feuille selon l'une des revendications 1 à 10, comprenant les étapes suivantes consistant à :
- mettre à disposition un film étiré monoaxialement dans le sens longitudinal, comprenant des couches (B) à (D) présentant une composition telle que décrite dans l'une des revendications 1 à 8, et dans lequel les couches (B) et (D) constituent les couches extérieures du film,
- appliquer sur la couche (B) une couche d'une dispersion liquide renfermant du polyuréthane et des nanoparticules,
- sécher la dispersion liquide afin de produire la couche (A),
- étirer le film dans le sens transversal afin de produire une feuille à orientation biaxiale.

13. Procédé de fabrication d'une feuille selon l'une des revendications 1 à 10, comprenant les étapes suivantes consistant à :
- mettre à disposition un film comprenant des couches (B) à (D) présentant une composition telle que décrite dans l'une des revendications 1 à 8 et dans lequel les couches (B) à (D) ne sont pas orientées et dans lequel les couches (B) et (D) constituent les couches extérieures du film,
- appliquer sur la couche (B) une dispersion liquide renfermant du polyuréthane et des nanoparticules,
- sécher la dispersion liquide par chauffage afin de produire la couche (A),
- étirer simultanément le film dans le sens longitudinal et dans le sens transversal afin de produire une feuille à orientation biaxiale.

14. Procédé selon l'une des revendications 12 et 13, **caractérisé en ce que** la surface de la couche (B) est soumise, avant l'application de la dispersion liquide, à un traitement de surface consistant de préférence en un traitement corona.

15. Procédé selon l'une des revendications 12 à 14, **caractérisé en ce que** la dispersion liquide est appliquée sur la couche (B) par enduction en ligne, de préférence selon le procédé de couchage par gravure à léchage à inversion (reverse gravure kiss coating).

16. Procédé selon l'une des revendications 12 à 15, **caractérisé en ce que** la couche humide formée par la dispersion liquide sur la couche (B) présente une masse allant de 3 à 20 g/m² et tout préférablement de 6 à 10 g/m².

17. Procédé selon l'une des revendications 12 à 16, **caractérisé en ce que** la dispersion liquide est une dispersion aqueuse.

18. Procédé selon l'une des revendications 12 à 17, **caractérisé en ce que** le rapport d'étirage dans le sens longitudinal se situe dans la plage allant de 2 à 8.

19. Procédé selon l'une des revendications 12 à 18, **caractérisé en ce que** le rapport d'étirage dans le sens transversal se situe dans la plage allant de 4 à 10.
